# EUROPEAN PATENT SPECIFICATION

(11) **EP 2 040 437 B1**
(45) Date of publication and mention of the grant of the patent: **06.05.2015**
(21) Application number: 08016740.6
(22) Date of filing: 24.09.2008
(51) Int. Cl.: H04L 29/06

(54) **Distributed ISP system for the inspection and elimination of eThreats in a multi-path environment**
Verteiltes ISP-System zur Überprüfung und Eliminierung von elektronischen Bedrohungen in einer Umgebung mit mehreren Pfaden
Système ISP distribué pour l'inspection et la suppression de menaces dans un environnement par trajets multiples

(30) Priority: 24.09.2007 IL 18622207
(43) Date of publication of application: 25.03.2009
(73) Proprietor: Deutsche Telekom AG, 53113 Bonn (DE)
(72) Inventor: Felstaine, Eyal, 64245 Tel Aviv (IL); Gilboa, Niv, 69361 Tel Aviv (IL); Chai, Eldad, 75437 Rishon Le Tsion (IL)
(74) Representative: Maiwald Patentanwalts GmbH

(56) References cited:
- GB-A- 2 416 891
- US-A1- 2004 199 792
- US-A1- 2005 216 770

## Description

### Field of the Invention

The present invention relates in general to a system for detecting contaminating (illegal) software code (hereinafter, eThreats), such as malware, adware, virus, etc., in computerized systems. More particularly, the invention relates to a system which performs the detection of eThreats at the Internet Service Provider (ISP) facilities, and in more particular to such a system where a multi-path access in terms of the number of inspection detection and elimination units (i.e., units which scan the data transfer for malicious code, hereinafter said unit will be referred to briefly as "inspection unit") per session per direction at the ISP exists between an attacker and a destination user. The invention involves the assigning of a manager inspection unit to which the whole packets of each session are maneuvered, wherein said manager inspection unit further applies mechanism for optimizing the flow and analysis rate during the session, by which the manager optionally determines and assigns another inspection unit as a manager, when desired.

### Background of the Invention

Electronic threats (eThreats) can be classified into three main categories: worm-related, non-worm related (i.e., virus, Trojan) and probes (i.e., adware, spyware, spam, phishing). ETreats introduce a significant danger to computer users in the Internet environment. The scientific community has provided various solutions for detecting and eliminating eThreats.

A first type of solution for the inspection, detection, and elimination of eThreats is commonly provided in a form of local inspection software such as Anti-Virus program, Adware detection program, etc., which is installed at the user station and continuously monitors the station in terms of intrusion and activation of eThreats. US 2005/216770 A1 discloses an example of a local inspection software solution. There are several drawbacks that are associated with such local solution, as follows:
a. Each user is responsible for the periodic update of the list of eThreats and their corresponding characteristics, generally by accessing the site of the inspection software provider.
b. The local approach can detect eThreats only after they reach the user station, and sometimes only after a damage has already been done to the station.
c. The local approach inspection software consumes some of the user station resources.

Recently, there is a growing interest for a second, centralized approach, in which the inspection of the data flow to users, and the eThreat detection and elimination is performed at the Internet Service Provider (ISP) facilities by means of an Inspection and Elimination Units (IEUs). An example of a centralized approach can be found in US 2004/199792 A1 and GB 2416891 A. Such a service is generally offered by the ISP to subscribers, which may be a single user, or a group of users within a same entity (such as a university, bank, etc.). In some cases the data flow inspection by the ISP is provided in addition to a local inspection software at the user station, as an additional layer of security. Although this centralized approach overcomes most of said drawbacks, the applying of said flow inspection and protection is relatively a hard task, as flow inspection has to be performed simultaneously and in parallel on very many user sessions, and moreover, the inspection has to be performed in an extremely high rate. Furthermore, and as the communication in each session is performed in a form of packets, the inspection unit has to deal with many sessions simultaneously, and therefore it is required to divide the entire data flow according to the corresponding sessions, in order to be capable of performing the analysis. Such a division of the inspection according to the corresponding sessions is required, as generally the analysis of a single packet cannot provide a conclusion whether the session is malicious or not. This very complicated task in a multi-session environment has to be performed in real time and at a high analysis rate.

Therefore, in order to perform this complicated task at a reasonable rate, ISPs generally use plurality of Inspection and Elimination Units (IEUs) at each of their sites. In that case, the ISP cannot guarantee that an entire given session between a first user and a second user passes through a same IEU for inspection and eThreat elimination (when necessary). Moreover, according to the prior art the ISP does not even guarantee that the full upstream or a full downstream communication of a session is handled by a same IEU. In other words, according to the present art the attacker can manage to send a portion of a malicious file (i.e., several packets) to a user through a first IEU of the ISP, and the rest of the file through another IEU. In that case, both the first and second IEUs, each analyzing only a portion of the file, may fail to recognize that the file is malicious. This problem arises in the first place from the fact that in today's structure there can exist a multi-path per session per direction (i.e., downstream or upstream) between an attacker and a victim user station in term of the IEUs that are utilized for the data flow inspection, a fact that the attacker can exploit. It should be noted that multi-path sessions generally occur naturally in asymmetric routing environments, where the downstream and upstream of the session pass through different routes. The transfer of a malicious file in a multi-path environment as described above is only one example. An attacker may similarly exploit such a multi-path environment in which there is no single IEU which monitors the flow in order to gain control of the victim station, to exploit vulnerabilities of operating systems, etc.

It is therefore an object of the present invention to provide a solution to the above described multi-path security problem, by which an attacker can divide a data transfer to a victim station between two or more IEUs of the ISP, where each IEU alone cannot determine the malicious characteristic of the data sent from the attacker.

It is an additional object of the present invention to provide said solution in an optimized way, which does not significantly affect the data flow rate.

It is still an object of the present invention to divide the task of analyzing the data flow between plurality of IEUs in an optimized manner.

Other objects and advantages of the present invention will become apparent as the description proceeds.

### Summary of the Invention

The invention relates to amethod for eliminating the possibility of exploiting by an attacker a multi-path type transfer in terms of the number of the ISP operated Inspection and Elimination Units -IEUs, the method comprises (a) providing a plurality of Enhanced Inspection and Elimination Units-EIEUs; (b) for each destination subscriber user, defining a set of EIEUs which includes all end EIEUs which can directly forward a packet to said destination subscriber user; (c) as long as no conclusion has been reached regarding to whether a session is malicious or not, forwarding all received session packets by any EIEU within the set to a manager EIEU for analysis; (d) upon receipt of a packet at said manager EIEU, forwarding the packet to the destination user computer, but also performing analysis at the manager EIEU on a copy of said packet, together with previously analyzed packets of a same session, in a try to reach a conclusion as to whether the session is malicious or not; (e) if a conclusion has not been reached even following said analysis, accumulating the packet together with said previous packets for further future analysis; (f) if, however, a conclusion is reached by said analysis that the packet belongs to a malicious session, creating a "drop" rule by said manager EIEU, and forwarding to all EIEUs within the set; (g) if, on the other hand, a conclusion is reached by said analysis that the packet belongs to a non-malicious session, creating a "pass" rule by said manager EIEU, and forwarding to all EIEUs within the set;

Preferably, the method also comprises the maintaining of a same hash function within all EIEUs of the set, and applying said hash function on a received packet of a session to which a manager EIEU has not yet been assigned, determining and assigning a manager EIEU for the session, forwarding the packet to the manager EIEU as determined, and forwarding a "forward to EIEU*ₓ*" rule to all EIEUs within the set, wherein x indicates the manager EIEU as assigned.

Preferably, when a rule exists within an EIEU, said rule is applied on each packet received.

Preferably, when a "pass" rule exists within an EIEU, the method comprises forwarding the packets received at said EIEU, and which belong to the session corresponding to said rule, to the computer of the subscriber with no further analysis.

Preferably, wherein when a "drop" rule exists within an EIEU, the method comprises dropping the packets received at said EIEU, and which belong to the session corresponding to said rule, with no further analysis.

Preferably, when a "forward to EIEU*ₓ*" rule exists within an EIEU, the method comprises forwarding the packets received at said EIEU, and which belong to the session corresponding to said rule, to the manager EIEU*ₓ* for analysis with no further analysis at said forwarding EIEU.

Preferably, the method further comprises predefining a threshold number of said accumulated packets, and upon exceeding said threshold, further performing analysis regarding the possible assigning of a new manager EIEU, and based on the result of said analysis, assigning a new manager EIEU, including sending a rule "forward to EIEU*ₓ*" to all the EIEUs within the set, wherein x indicates the newly assigned manager EIEU*ₓ*, and further sending to said new manager EIEU all the packets thus far accumulated at the previous manager EIEU for use in future analysis.

### Brief Description of the Drawings

In the drawings:
- Fig. 1 shows in block diagram form an ISP inspection and elimination system according to the prior art;
- Fig. 2 shows in block diagram form an ISP inspection and elimination system according to the present invention; and
- Fig. 3 is a flow diagram illustrating the method of operation of an EIEU according to the present invention.

### Detailed Description of Preferred Embodiments

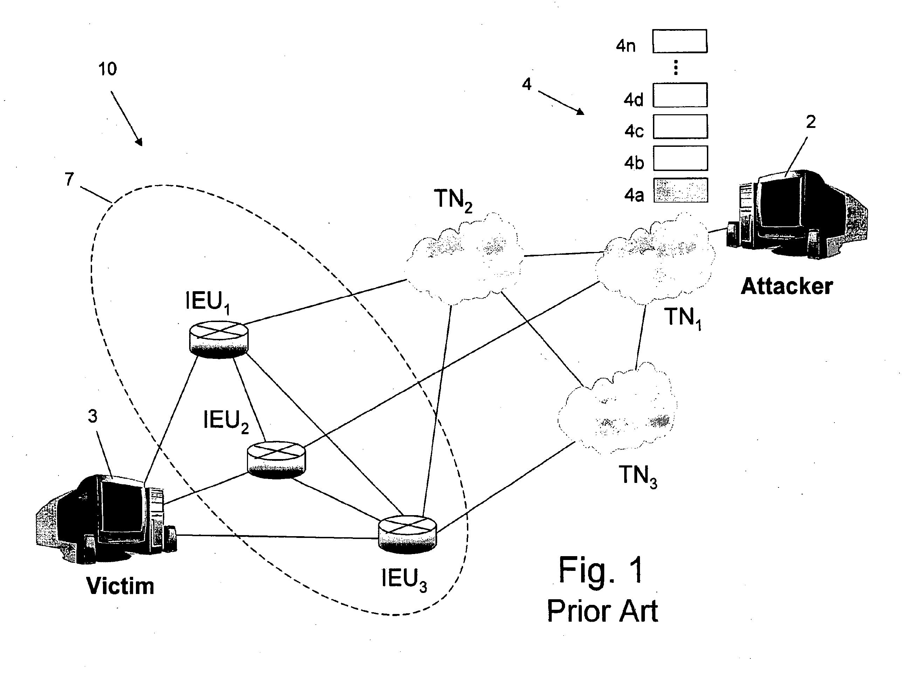

Fig. 1 shows a typical prior art system 10 for the inspection, detection, and elimination of malicious files by an Internet Service Provider (ISP). As previously mentioned, such a service is provided by the ISP generally to those who subscribe for such a service. The system comprises at the ISP facility 7, just before forwarding data to the computer 3 of a subscriber user, a plurality of inspection and elimination units (IEUs), for example, IEU₁, IEU₂, and IEU3, that are used by the ISP to inspect and eliminate malicious files from reaching computer 3. As said, all said IEUs are used together to inspect many active sessions, for plurality of subscriber users. With respect to a specific subscriber, for example the user of computer 3, and in view of the transfer load, the ISP 7 uses plurality of IEUs together, even simultaneously, to inspect the various packets that are targeted to computer 3. A simultaneous inspection by said plurality of IEUs is performed even when the packets relate to a same session. For example, and with respect to victim computer 3, the ISP uses IEU₁, IEU₂, and IEU₃ to inspect plurality packets, which may all relate to a single session that takes place between computer 3 and another computer (for example computer 2) which is connected to the network. Therefore, an "attacker" user who uses computer 2, and who wishes to transfer a file which comprises plurality of packets 4a-4n to said second computer 3 (which will also be referred to as "victim"), may have various routes to do so. The ISP 7, however, ensures that all the data files that are transferred to the subscriber 3 are checked by at least one of the IEUs IEU₁, IEU₂, or IEU₃. For example, one possible route for the session may be from the attacker computer 2 to transit network TN₁, then to transit network TN₃, and then to the victim computer 3 through IEU₃, which is within the facility of ISP 7. The term transit network (TN) as used herein refers to any conventional type of network, whether within the facilities of the ISP which provides service to the recipient computer, or within the facilities of another ISP. Another possible route may be, for example, from the attacker computer 2 to transit network TN₁, then to transit network TN₂, and then to the victim computer 3 through IEU₁, which as said is within the facility of ISP 7. Still another route may be, for example, from the attacker computer 2 to transit network TN₁, and then to the victim computer 3 through IEU₂. In any case, according to the prior art the ISP 7 ensures that at least one (and in many cases more than one) of the IEUs IEU₁, IEU₂, or IEU₃ is involved in checking the data transfer to computer 3, even within a same session. A sophisticated attacker who wishes to send a malicious file 4 to the victim computer 3 can cause a situation by which only portion of a malicious file 4, for example, packets 4a and 4b of the file, will be inspected and analyzed by a first IEU, for example IEU₁, and additional packets of file 4, for example, packets 4c-4e, will be inspected and analyzed by another IEU, for example, IEU₃. Generally, in average, an IEU needs to check up to 5 packets of a file in order to determine whether the file is malicious (eThreat) or not. However, by IEU₁ checking only packets 4a and 4b, and IEU₃ checking only packets 4c-4e, it may be the case that none of the IEUs will be able to determine and alert about malicious file 4. The present invention provides a solution to such a problem, where a multi-path exists between the attacker and the victim in terms of the IEUs which inspect the data flow to a victim computer.

The above is only an example which shows how an attacker using computer 3 can transfer a malicious file to the victim computer 2, in a multi-path environment (in terms of the number of IEUs that inspect the packets that are transferred to a computer of a subscriber user). In a similar manner, an attacker may exploit this drawback to gain control of the victim computer 3, or he may use other communication manners to cause damage to computer 3.

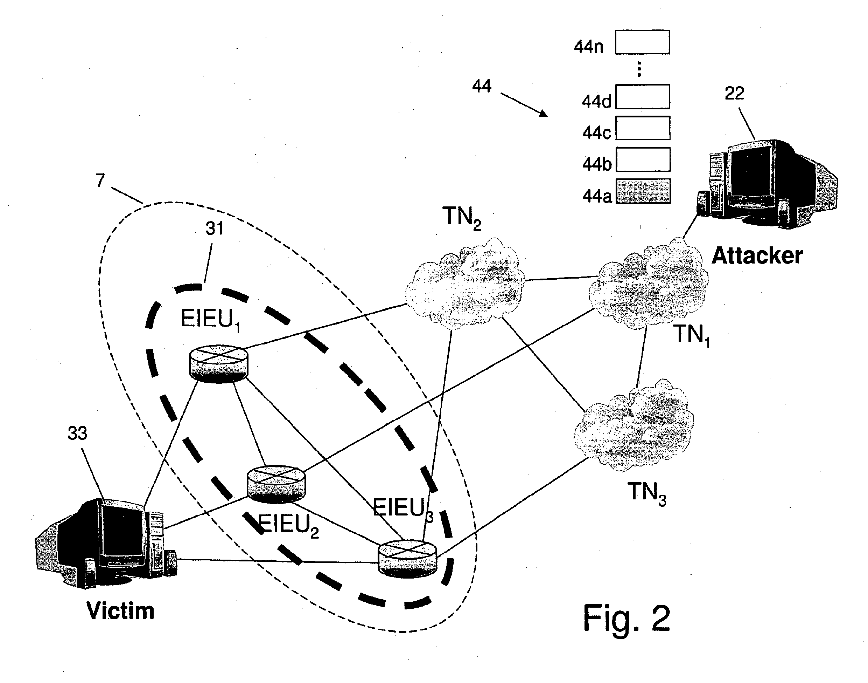

Fig. 2 shows a general structure of a distributed inspection system according to an embodiment of the present invention. According to the present invention, Enhanced Inspection and Elimination Units are used, which will be referred to herein as EIEUs. According to the present invention, in a first stage a set 11 of end EIEUs is defined for each ISP subscriber. The set 31 of end EIEUs includes all the EIEUs of ISP 7 which may be used to inspect and analyze the data transfer to subscriber computer 3. In other words, there is no EIEU outside of set 31 which analyzes data transfer to user 33 through which an attacker can pass a packet to subscriber 33. It should be noted that ISP 7 may include additional EIEUs, however, they are not indicated in Fig. 2 for the sake of brevity, as they do not analyze data transfer to computer 33. The EIEUs of the system of the present invention are similar to the IEUs of the prior art system of Fig. 1 in that they inspect and eliminate malicious code, but each of them further comprises enhanced managing features, as will be described in more details hereinafter.

Each of the EIEUs of the present invention comprises a copy of a hash function, for example, *h*(*senderIP*) → *EIEUₓ.* The hash function may include, instead of the (*senderIP*), any other characteristic which identifies a session, such as a ports, protocol, etc. The following description, however, assumes that the hash function *h*(*senderIP*) → *EIEUₓ* is used. Each packet that arrives an EIEU within ISP 7 is subject to said hash function, which determines which single EIEU within the set 31 is the default manager for this packet based (in this example) on the IP of the origin station. The hash function is so defined to assign only one default EIEU for each origin IP. Of course, the origin IP is in many cases unknown beforehand, and therefore the hash function is so defined to handle such cases. Therefore, in this case the hash function ensures that all the files of a given session that are originated from a same IP will be forwarded to a same default (manager) EIEU within set 31. The specific EIEU as assigned by the hash function serves as a manager for that session, as long as no alternative assignment has been made.

For example, and with reference to Fig. 2, attacker 22 may try to send a file 44a-44n to the victim computer 33. Assuming that a first package 44a arrives EIEU₃, the hash function is activated on this packet, resulting with an indication that the default manager EIEU for the IP of attacker 22 is EIEU₂. The packet is therefore forwarded to EIEU₂ for analysis. Next, and assuming that packet 44b is sent and reaches EIEU₁, it is also forwarded to EIEU₂ for analysis, as EIEU₂ is the manager. Therefore, all the packets that are received from the attacker station 22 at any of the EIEUs of set 31 are forwarded (following the activation of the hash function at the corresponding EIEU) to the corresponding manager EIEU₂ for analysis.

Generally, an EIEU needs to analyze about 5 packets of a file in order to determine whether they are a part of a malicious file or not. As long as no conclusion is reached by the manager EIEU regarding to whether the packet relates to a malicious file or not, the EIEU forwards the packet to the destination (computer 33), but it leaves a copy of the packet within the EIEU. However, when the EIEU reaches a conclusion that the collection of packets it possesses relate to a malicious file, it terminates the following transfer of packets of same file that are received from the same IP address to the destination computer 33. The EIEU has 3 main categories for treating a packet: PASS, ANALYZE, and BLOCK. The PASS category indicates that the packet can be forwarded to the destination with no analysis, for example, as it has been already determined that it is a part of a file which is not malicious. The BLOCK category blocks that transfer of the packet to the destination, and the ANALYZE category indicates that the EIEU forwards the packet to the destination, but it also maintains a copy of it for further analysis. The above are only the main categories, and there may be additional categories within the EIEU for handling the packets.

The procedure as described so far can eliminate the transfer of a malicious file 44 to computer 33, as all the packets of file 44 are transferred to a same manager EIEU (in this case EIEU₂), which performs the analysis. According to this procedure there is no way by which various packets that are sent from an attacker are analyzed by two or more separate EIEUs. Only one manager EIEU analyzes all the packets coming from the attacker computer 22, and whose destination is the user computer 33. In that case, the security is improved, as there is no way by which a portion of a file 44 is analyzed by one EIEU, and another portion of the file 44 is analyzed by another EIEU. All the file packets are analyzed by a same EIEU, which therefore can perform the analysis in a more reliable way that in the prior art. However, the procedure as described so far may not be so efficient, as it sometimes involves a significant load of packets' transfer from various EIEUs of set 31 to the assigned manager EIEU.

According to a more preferred embodiment of the invention, each assigned manager EIEU maintains for each session a list which specifies for each packet that it receives the index of the corresponding EIEU (hereinafter: "the forwarding EIEU") which has forwarded the packet to the manager EIEU. For those packets that have been directly received at the manager EIEU, a null indication may be provided. For example, and assuming that ISP 7 has 4 EIEUs (EIEU₁- EIEU₄) and that manager EIEU for a specific session is EIEU₄, this list may look for the first 10 packets as follows:

**Table 1**

| **Packet No.** | **The EIEU the packet first arrived to** |
|---|---|
| 1 | EIEU₁ |
| 2 | EIEU₁ |
| 3 | EIEU₂ |
| 4 | EIEU₃ |
| 5 | ----- |
| 6 | EIEU₃ |
| 7 | ----- |
| 8 | EIEU₃ |
| 9 | EIEU₃ |
| 10 | EIEU₃ |

It can be noted from this table that, out of the first 10 packets in this session, the manager EIEU₄ receives 2 packets, from EIEU₁, one packet is received from EIEU₂, and 5 packets from EIEU₃. Two additional packets, packet₅ and packet₇ are received directly at EIEU₄. That means that the assignment of EIEU₄ as the manager for this session is not efficient. Obviously, the most efficient manager for this scenario is EIEU₃. Therefore, after determining this fact, the manager EIEU₄ assigns EIEU₃ as the new manager. This new assignment also involves the transfer of all the packets accumulated thus far (in this case packet₁-packet₁₀) to the new manager EIEU₃, so that EIEU₃ will be able to continue the analysis from this point. It should be noted that a new assignment of a manager EIEU is not always efficient, as it involves the transfer of all said accumulated packets. However, a threshold number of packets can be defined, beyond which a decision is made regarding the new manger EIEU. For example, such a threshold may be 7 packets.

In still another aspect of the invention, preferably when the manager EIEU determines that a whole session is not malicious, or otherwise, that it is malicious, or that it is the manager that should be assigned for the current session, this EIEU defines a corresponding rule, and it sends the rule to all the other EIEUs to act accordingly. Upon receipt of the rule, the receiving EIEUs (i.e., EIEUs that are not the manager for the session) will either: (a) pass the next packets of the session directly to the destination computer 33 with no analysis (as it has been determined that the session is no malicious), (b) drop all next packets of this session (as it has been determined that the session is malicious), or (c) forward the next packets of the same session to the manager EIEU as defined by the rule. In said latter case, even the hash function is not performed on next received packets of the same session. To summarize: (a) packets may be forwarded to the manager EIEU only when there is a need for analysis, or they may be dropped or forwarded to the destination computer according to the corresponding rule. (b) when the manager for the session is unknown, the manager is determined according to a hash function; and (c) when the number of checked packets at the manager EIEU becomes large and no conclusion has been yet reached regarding to whether the session is malicious, an analysis is made to determine the most efficient manager, and if necessary, a new manager EIEU is defined and a corresponding rule is distributed to all other EIEUs, and all packets accumulated thus far are also transferred accordingly to the new manager EIEU.

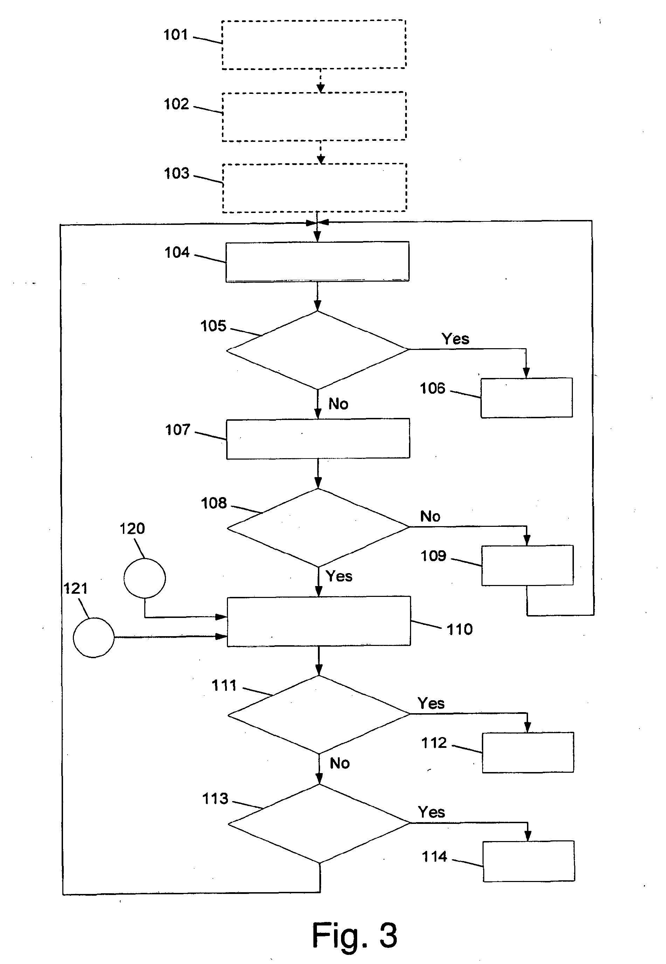

Fig. 3 illustrates the process (method) of the present invention as performed by the EIEUs. For the sake of brevity, the steps 101 - 103 which are performed once, and off line, and are shown by hatch lines. In step 101, a set of EIEUs is defined for each user. As elaborated above, the set includes all the end EIEUs which transfer data to said user (for example, set 31 of Fig. 2). In step 102, a hash function is defined, and same function is sent to all the EIEUs within a same set. In step 103, a threshold number of packets is also defined, and saved within all EIEUs of the set. The object of this threshold number is to indicate when it is efficient to assign a new packet for the session. As said, steps 101 - 103 above are performed only once for the whole set, and they define essential parameters for the process.

In step 104, a new packet is received, and the session to which the packet belongs is also determined.

In step 105, the present EIEU checks whether it contains a rule concerning packets of this session. Such a rule may have been previously determined by the present EIEU, or it may have been received from a manager EIEU for that session. The rule may state one of the following:
a. drop all packets relating to session#; or
b. pass all packets to the subscriber computer (33 in Fig. 3) without analysis (as the session has been previously found to be valid, i.e., non-malicious);
c. forward to EIEU*ₓ* - where *x* determines the manager EIEU for the session.

If the answer in step 105 is positive (Y), in step 106 the action which corresponds to the cases a-c of step 105 is accordingly performed;

Otherwise, if the answer in step 105 is negative (N), in step 107 the EIEU applies the hash function as determined in step 102 on the packet. The result of step 107 is the default manager for the session, to which the present packet belongs. The result of the hash function indicates only a single manager EIEU.

In step 108, the EIEU checks whether the result of the hash function points to the present EIEU or not. In the positive (Y) case, i.e., when the result points to the present EIEU, the packet is transferred to the analysis of step 110. In the negative (N) case, when the result of the hash function points to another manager EIEU, the process proceeds to step 109 where the packet is forwarded to the manager EIEU for analysis (as pointed by the result of the hash function), and the operation returns to step 103 for receiving a new packet.

In step 110, and assuming that the present EIEU is the manager EIEU for the session, the manager analyzes the present packet together with all previously accumulated packets of the same session, to determine whether it relates to a malicious session or not. Step 111 checks whether a conclusion has been reached as to whether the session is malicious or not. In the positive (Y) case (i.e., that the analysis of step 110 clearly provides a Yes/No answer regarding to whether the session is malicious), in step 112 a rule is defined accordingly and distributed to all other EIEUs of the set 31 notifying them: (a) that this session has been found to be malicious, and therefore all next packets of a same session should be dropped; or (b) that session has been found to be non-malicious, and therefore all next packets of same session should be forwarded to the subscriber computer (33 in Fig. 2) without analysis.

If, however, no conclusion has been reached in step 111, in step 113 the process checks whether the number of packets that have been already accumulated for analysis has exceeded the threshold number as pre-defined in step 103. If the number indeed exceeded said threshold number, in step 114 the process finds performs the analysis as described with respect to table 1 discussed above, and finds the most efficient manager EIEU for the session. If the result of step 114 shows that present EIEU is the most efficient, nothing happened, and the process continues from step 104 upon receipt of a new packet. If, however, the analysis of step 114 indicates that it is more efficient that the future analysis, upon receipt of new packets of this session, will be performed by a another manager EIEU, the EIEU assigns in step 114 said new manager EIEU. The new assignment involves sending an appropriate notification to all the EIEUs of the set, and in additional, sending all packets that have been accumulated thus far for analysis to the newly assigned manager EIEU.

The process of Fig. 3 also includes packets that are received from another EIEU within set 31 for analysis within the present EIEU which is the manager for the session. The input 120 indicates a single packet that has been received for analysis from another EIEU, either as a result of a rule (step 105(c) performed by another EIEU, or as a result of the application of the hash function on a packet (step 109 performed by another EIEU). The input 121 indicates plurality of packet that have been received for analysis from another manager EIEU, that newly assigns the present EIEU as a manager EIEU, and which forwards all the packets it has accumulated thus far, for future analysis by the present (manager) EIEU.

As shown, the present invention provides a process and system for eliminating the possibility of an attacker to exploit multi-path routing in terms of the number of IEUs analyzing the packets of a same session, in order to transfer malicious code to a subscriber computer.

While some embodiments of the invention have been described by way of illustration, it will be apparent that the invention can be carried into practice with many modifications, variations and adaptations, and with the use of numerous equivalents or alternative solutions that are within the scope of the claims.

## Claims

1. Method for eliminating the possibility of exploiting by an attacker a multi-path type transfer in terms of the number of the ISP operated Inspection and Elimination Units -IEUs, the method **characterised by**:
a. providing a plurality of Enhanced Inspection and Elimination Units-EIEUs;
b. for each destination subscriber user, defining a set of EIEUs which includes all end EIEUs which can directly forward a packet to said destination subscriber user;
c. as long as no conclusion has been reached regarding to whether a session is malicious or not, forwarding all received session packets by any EIEU within the set to a manager EIEU for analysis;
d. upon receipt of a packet at said manager EIEU, forwarding the packet to the destination user computer, but also performing analysis at the manager EIEU on a copy of said packet, together with previously analyzed packets of a same session, in a try to reach a conclusion as to whether the session is malicious or not;
e. if a conclusion has not been reached even following said analysis, accumulating the packet together with said previous packets for further future analysis;
f. if, however, a conclusion is reached by said analysis that the packet belongs to a malicious session, creating a "drop" rule by said manager EIEU, and forwarding to all EIEUs within the set;
g. if, on the other hand, a conclusion is reached by said analysis that the packet belongs to a non-malicious session, creating a "pass" rule by said manager EIEU, and forwarding to all EIEUs within the set.

2. Method according to claim 1, further comprising maintaining a same hash function within all EIEUs of the set, and applying said hash function on a received packet of a session to which a manager EIEU has not yet been assigned, determining and assigning a manager EIEU for the session, forwarding the packet to the manager EIEU as determined, and forwarding a "forward to EIEU*ₓ*" rule to all EIEUs within the set, wherein *x* indicates the manager EIEU as assigned.

3. Method according to claim 1, wherein when a rule exists within an EIEU, applying said rule on each packet received.

4. Method according to claim 1, wherein when a "pass" rule exists within an EIEU, forwarding the packets received at said EIEU, and which belong to the session corresponding to said rule, to the computer of the subscriber with no further analysis.

5. Method according to claim 1, wherein when a "drop" rule exists within an EIEU, dropping the packets received at said EIEU, and which belong to the session corresponding to said rule, with no further analysis.

6. Method according to claim 2, wherein when a "forward to EIEU*ₓ*" rule exists within an EIEU, forwarding the packets received at said EIEU, and which belong to the session corresponding to said rule, to the manager EIEU*ₓ* for analysis with no further analysis at said forwarding EIEU.

7. Method according to claim 1, further comprising predefining a threshold number of said accumulated packets, and upon exceeding said threshold, further performing analysis regarding the possible assigning of a new manager EIEU, and based on the result of said analysis, assigning a new manager EIEU, including sending a rule "forward to EIEU*ₓ*" to all the EIEUs within the set, wherein *x* indicates the newly assigned manager EIEU*ₓ*, and further sending to said new manager EIEU all the packets thus far accumulated at the previous manager EIEU for use in future analysis.

## Patentansprüche

1. Verfahren zum Eliminieren der Möglichkeit für einen Angreifer, eine Mehrwegübertragung, bezogen auf die Anzahl der vom Internetdienstanbieter betriebenen Untersuchungs- und Eliminierungseinheiten (*Inspection and Elimination Units,* IEUs), auszunutzen, wobei das Verfahren **gekennzeichnet ist durch**:
a. Bereitstellen einer Mehrzahl von erweiterten Untersuchungs- und Eliminierungseinheiten (*Enhanced Inspection and Elimination Units,* EIEUs);
b. Definieren einer Gruppe von EIEUs, die alle End-EIEUs umfasst, welche ein Paket direkt an einen Zielteilnehmer weiterleiten können, für jeden Zielteilnehmer;
c. Weiterleiten aller von einer EIEU in der Gruppe empfangenen Übertragungspakete an eine Manager-EIEU zur Analyse, solange nicht festgestellt wurde, ob eine Übertragung schädlich ist oder nicht;
d. Weiterleiten des Pakets nach Empfang eines Pakets **durch** die Manager-EIEU an den Computer des Zielbenutzers und gleichzeitig Durchführen der Analyse in der Manager-EIEU an einer Kopie des Pakets, gemeinsam mit zuvor analysierten Paketen aus derselben Übertragung, in einem Versuch festzustellen, ob die Übertragung schädlich ist oder nicht;
e. Zusammenfassen des Pakets mit den vorherigen Paketen für weitere zukünftige Analyse, falls selbst nach der Analyse kein Ergebnis vorliegt;
f. Erstellen einer "Verwerfen"-Regel **durch** die Manager-EIEU und Weiterleiten derselben an alle EIEU in der Gruppe, falls jedoch durch die Analyse festgestellt wird, dass das Paket zu einer schädlichen Übertragung gehört;
g. Erstellen einer "Durchlassen"-Regel **durch** die Manager-EIEU und Weiterleiten derselben an alle EIEU in der Gruppe, falls andererseits festgestellt wird, dass das Paket zu einer nicht schädlichen Übertragung gehört.

2. Verfahren nach Anspruch 1, ferner umfassend das Beibehalten einer identischen Hashfunktion in allen EIEU der Gruppe und das Anwenden der Hashfunktion für ein empfangenes Paket einer Übertragung, der noch keine Manager-EIEU zugeordnet worden ist, das Bestimmen und Zuordnen einer Manager-EIEU für die Übertragung, das Weiterleiten des Pakets an die bestimmte Manager-EIEU und das Weiterleiten einer "Weiterleiten an EIEU*ₓ*"-Regel an alle EIEU in der Gruppe, wobei *x* die zugeordnete Manager-EIEU angibt.

3. Verfahren nach Anspruch 1, umfassend, wenn in einer EIEU eine Regel vorliegt, das Anwenden dieser Regel für jedes empfangene Paket.

4. Verfahren nach Anspruch 1, umfassend, wenn eine "Durchlassen"-Regel in einer EIEU vorliegt, das Weiterleiten der an der EIEU empfangenen Pakete, die zur Übertragung gehören, welche der Regel entspricht, ohne weitere Analyse an den Computer des Teilnehmers.

5. Verfahren nach Anspruch 1, umfassend, wenn eine "Verwerfen"-Regel in einer EIEU vorliegt, das Verwerfen der an der EIEU empfangenen Pakete, die zur Übertragung gehören, welche der Regel entspricht, ohne weitere Analyse.

6. Verfahren nach Anspruch 2, umfassend, wenn eine "Weiterleiten an EIEU*ₓ*"-Regel in einer EIEU vorliegt, das Weiterleiten der an der EIEU empfangenen Pakete, die zur Übertragung gehören, welche der Regel entspricht, ohne weitere Analyse in der weiterleitenden EIEU zur Analyse an die Manager-EIEU*ₓ*.

7. Verfahren nach Anspruch 1, ferner umfassend das Vorbestimmen eines Schwellenwerts für die Anzahl zusammengefasster Pakete und, bei Überschreiten des Schwellenwerts, das Durchführen einer Analyse zum möglichen Zuordnen einer neuen Manager-EIEU und, basierend auf dem Ergebnis der Analyse, das Zuordnen einer neuen Manager-EIEU, einschließlich das Senden einer "Weiterleiten an EIEU*ₓ*"-Regel an alle EIEU in der Gruppe, wobei *x* die neu zugeordnete Manager-EIEU*ₓ* angibt, und ferner das Senden aller bislang in der vorherigen Manager-EIEU zusammengefassten Pakete zur Verwendung bei zukünftiger Analyse an die neue Manager-EIEU.

## Revendications

1. Procédé pour supprimer la possibilité d'exploiter, par un pirate, un transfert de type multi-trajets en termes de nombre d'unités d'inspection et de suppression (IEU) gérées par un fournisseur d'accès à Internet (ISP), le procédé étant **caractérisé par** les étapes consistant à :
a. fournir une pluralité d'unités d'inspection et de suppression améliorées (EIEU),
b. pour chaque utilisateur abonné de destination, définir un ensemble d'EIEU qui inclut toutes les EIEU d'extrémité qui peuvent directement transférer un paquet audit utilisateur abonné de destination,
c. tant qu'aucune conclusion n'a été tirée sur le fait qu'une session est malveillante ou non, transférer tous les paquets de session reçus par une EIEU quelconque au sein de l'ensemble à une EIEU de gestion en vue d'une analyse,
d. à la réception d'un paquet sur ladite EIEU de gestion, transférer le paquet à l'ordinateur utilisateur de destination, mais effectuer également une analyse sur l'EIEU de gestion sur une copie dudit paquet conjointement avec des paquets précédemment analysés d'une même session, pour tenter de tirer une conclusion sur le fait que la session est malveillante ou non,
e. si aucune conclusion n'a été tirée même après ladite analyse, accumuler le paquet en association avec lesdits paquets précédents en vue d'une future analyse complémentaire,
f. en revanche, si ladite analyse parvient à la conclusion que le paquet appartient à une session malveillante, créer une règle "de rejet" par ladite EIEU de gestion et transférer à toutes les EIEU au sein de l'ensemble,
g. d'autre part, si ladite analyse parvient à la conclusion que le paquet appartient à une session non malveillante, créer une règle "d'acceptation" par ladite EIEU de gestion et transférer à toutes les EIEU au sein de l'ensemble.

2. Procédé selon la revendication 1, comportant en outre les étapes consistant à maintenir une même fonction de hachage au sein de toutes les EIEU de l'ensemble, et appliquer ladite fonction de hachage sur un paquet reçu d'une session à laquelle une EIEU de gestion n'a pas encore été affectée, déterminer et affecter une EIEU de gestion pour la session, transférer le paquet à l'EIEU de gestion déterminée, et transférer une règle "de transfert à l'EIEUₓ" à toutes les EIEU au sein de l'ensemble, où x indique l'EIEU de gestion affectée.

3. Procédé selon la revendication 1, comportant, lorsqu'il existe une règle au sein d'une EIEU, l'étape consistant à appliquer ladite règle à chaque paquet reçu.

4. Procédé selon la revendication 1, comportant, lorsqu'il existe une règle "d'acceptation" au sein d'une EIEU, l'étape consistant à transférer les paquets reçus sur ladite EIEU et qui appartiennent à la session correspondant à ladite règle, à l'ordinateur de l'abonné sans aucune analyse complémentaire.

5. Procédé selon la revendication 1, comportant, lorsqu'il existe une règle "de rejet" au sein d'une EIEU, l'étape consistant à rejeter les paquets reçus sur ladite EIEU et qui appartiennent à la session correspondant à ladite règle, sans aucune analyse complémentaire.

6. Procédé selon la revendication 2, comportant, lorsqu'il existe une règle "de transfert à l'EIEU*ₓ*" au sein d'une EIEU, l'étape consistant à transférer les paquets reçus sur ladite EIEU et qui appartiennent à la session correspondant à ladite règle, à l'EIEUₓ de gestion en vue d'une analyse, sans aucune analyse complémentaire sur ladite EIEU de transfert.

7. Procédé selon la revendication 1, comportant en outre les étapes consistant à prédéfinir un nombre seuil desdits paquets accumulés, et lors d'un dépassement dudit seuil, effectuer également une analyse concernant l'affectation possible d'une nouvelle EIEU de gestion, et sur la base du résultat de ladite analyse, affecter une nouvelle EIEU de gestion, incluant l'envoi d'une règle "de transfert à l'EIEUₓ" à toutes les EIEU au sein de l'ensemble, où x indique l'EIEUₓ de gestion nouvellement affectée, et envoyer également à ladite nouvelle EIEU de gestion tous les paquets ainsi accumulés jusqu'à présent sur l'EIEU de gestion précédente en vue d'une utilisation dans une future analyse.
